# EUROPÄISCHE PATENTSCHRIFT

(11) **EP 0 427 158 B1**
(45) Veröffentlichungstag und Bekanntmachung des Hinweises auf die Patenterteilung: **12.10.1994**
(21) Anmeldenummer: 90121084.9
(22) Anmeldetag: 03.11.1990
(51) Int. Cl.: H04B 1/16

(54) **Verfahren zum batteriesparenden Betrieb eines tragbaren Rufempfängers**
Battery saving method for portable pager
Procédé pour économiser les piles d'un radiorécépteur d'appel

(30) Priorität: 06.11.1989 CH 3989/89
(43) Veröffentlichungstag der Anmeldung: 15.05.1991
(73) Patentinhaber: FIRMA ERIKA KÖCHLER, CH-8833 Samstagern (CH)
(72) Erfinder: Lax, Alexander Peter (Brite), 8807 Freienbach (CH)
(74) Vertreter: Blum, Rudolf Emil Ernst

(56) Entgegenhaltungen:
- EP-A- 0 198 448
- EP-A- 0 255 048
- EP-A- 0 319 219
- GB-A- 2 072 908

## Beschreibung

Die Erfindung betrifft ein Verfahren gemäss Oberbegriff des Anspruchs 1 bzw. gemäss Oberbegriff des Anspruchs 3.

Personenrufnetze können z.B. als lokale oder landesweite Systeme aufgebaut sein, die zur Erweiterung des Telephonnetzes über Funkstationen oder sog. Basisstationen Signale an kleine, tragbare Funkrufempfänger übermitteln. An den Empfänger können z.B. einfache Rufsignale übermittelt werden, aber auch Zahlen, wie eine vom Träger anzurufende Telefonnummer, die Telefonnummer des Anrufers selbst oder andere Meldungen. Die als Rufempfänger dienenden Geräte sind so ausgestaltet, dass sie die Funksignale der Basisstationen mit hoher Uebertragungsgeschwindigkeit sicher empfangen und die darin übermittelte Meldung erkennen sowie ausgeben können. Der Rufempfänger wird dabei von der Trägerperson z.B. in einer Brusttasche oder am Hosenbund bzw. einem Gurt getragen und soll entsprechend klein und leicht ausgebildet sein. Dies wiederum führt zur Notwendigkeit kleiner Batterien für den Rufempfänger, welche damit nur eine beschränkte Kapazität aufweisen. Andererseits soll natürlich vermieden werden, dass die Batterien zu oft ausgewechselt werden müssen.

Um bei kleinen Batteriekapazitäten eine möglichst grosse Lebensdauer zu erzielen, muss deshalb der Verbrauch der tragbaren Rufempfängervorrichtung so stark als möglich gesenkt werden. Dies kann nur beschränkt durch besondere Ausgestaltung der elektrischen Schaltungen erzielt werden.

Andererseits kann die Rufempfängervorrichtung auch nicht über längere Zeit einfach abgeschaltet werden, da sie ja ständig für den Empfang von Personenfunkrufsignalen bereit stehen muss.

In bekannten Personenrufnetzen werden die Personenrufsignale im sog. POCSAG-Format ausgesendet. In diesem Standardformat ist eine Präambel mit einer Länge von mindestens 576 Bits vorgesehen. Die Rufempfänger sind dabei so eingerichtet, dass sie sich mindestens so oft einschalten, dass sie jeweils einen Teil dieser Präambel empfangen. Dies ist z.B. dann der Fall, wenn sie jede 500 Bit (gemäss der entsprechenden Uebertragungsrate) eingeschaltet werden, wobei die Anschaltzeit z.B. jeweils 50 msec beträgt. Bei einer Uebertragungsrate von 512 baud, ist also der Empfänger in jeder Sekunde während mindestens 50 msec eingeschaltet. Wird ferner angenommen, dass im Durchschnitt nur alle 2 Minuten eine Personenrufmeldung ausgestrahlt wird, für deren Empfang der Rufempfänger während 2 sec angeschaltet ist, so beträgt seine totale Anschaltzeit 8 Sekunden auf 2 Minuten, was einem Aus/Ein-Verhältnis von 15 entspricht. Bei solchen Verhältnissen ist indessen die Betriebsdauer der Batterie noch zu kurz.

Gemäss der EP-A-0 319 219 wird für den batteriesparenden Betrieb von gruppenweise auswählbaren Rufempfängern vorgeschlagen, dass jeweils über das Funkrufnetz ein spezifischer Kode ausgestrahlt wird, wenn den Rufempfängern einer Gruppe keine Nachricht zu übermitteln ist. Aufgrund dieses von den Basisstationen ausgestrahlten speziellen Kodes schalten sich die Rufempfänger dieser Gruppe für eine vorbestimmte Zeit aus. Nachteilig an dieser Lösung ist, dass das Funkrufnetz durch die zusätzlichen Spezialkodes belastet wird, und dass sendeseitig ein zusätzlicher apparativer Aufwand benötigt wird, um den speziellen Kode zu erzeugen und auszusenden.

Es stellt sich auf dem Hintergrund dieses Standes der Technik deshalb die Aufgabe, einen tragbaren Rufempfänger so auszugestalten und zu betreiben, dass das AUS/EIN-Verhältnis wesentlich verbessert werden kann, ohne dass die Empfangssicherheit darunter leidet.

Diese Aufgabe wird jeweils durch die kennzeichnenden Merkmale des patentanspruches 1 bzw. 3 gelöst.

Jeder Rufempfänger kann sich damit selbsttätig, d.h. ohne äussere Steuersignale über das Funkrufnetz, an das zeitliche Eintreffen der Funkrufsignale derart adaptieren, dass ein möglichst günstiges AUS/EIN-Verhältnis der grossen Stromverbraucher, insbesondere der Empfangsschaltung, erzielt wird, womit sich die Batterielebensdauer wesentlich erhöhen lässt.

Dies ist vor allem in den folgenden Ausgestaltungen von Personenrufnetzen sehr vorteilhaft:

In einem ersten Fall gemäss Patentanspruch 1 wird von einem Personenrufnetz ausgegangen, bei dem keine vorbekannte zeitliche Uebermittlungsstruktur der Rufsignale vorliegt, wie dies z.B. bei den erwähnten POCSAG-Uebermittlungen der Fall ist. Auch bei solchen Netzen erfolgt jedoch die Aussendung der Rufsignale oft in sich regelmässig wiederholenden Zyklen, die über längere Zeit beibehalten werden. In diesem Fall wird erfindungsgemäss anhand der mit hoher Abtastrate empfangenen Signale die Zeitstruktur des Sendezyklus festgestellt und auf eine zweite Betriebsart mit reduzierter Abtastrate umgeschaltet, in welcher der Rufempfänger nur gemäss dem festgestellten Sendezyklus eingeschaltet wird, womit sich das AUS/EIN-Verhältnis wesentlich erhöhen lässt.

Andererseits gibt es Personenrufnetze, welche ihre Meldungen auf bestimmten Frequenzen in einer vorbekannten, zeitlichen Struktur übermitteln. Hier wird die erfindungsgemässe Lösung gemäss Patentanspruch 3 verwendet. Dabei wird der Stromverbrauch gesenkt, wenn der Rufempfänger keine Rufsignale mehr empfängt. In diesem Fall wird auf eine zweite Betriebsart umgeschaltet, die der erwähnten bekannten zeitlichen Uebermittlungsstruktur so angepasst ist, dass mit einem maximalen AUS/EIN-Verhältnis nach dem Auftauchen von Funkrufen gesucht wird.

Nachfolgend werden diese Ausführungen der Erfindung anhand der beiliegenden Zeichnungen näher erläutert. Darin zeigen:
Fig. 1 eine schematische Darstellung des Aufbaus des gesamten Personenrufnetzes;
Fig. 2 eine schematische Darstellung eines einzelnen Rufempfängers;
Fig. 3 ein Laufzeitdiagramm der Signale eines ersten Personenrufnetzes, bei welchem die Rufsignale in zunächst nicht bekannten Zyklen ausgestrahlt werden;
Fig. 4 die AUS/EIN-Sequenzen eines Rufempfängers in einem solchen Personenrufnetz in beiden Betriebsarten;
Fig. 5 ein Laufzeitdiagramm der Signale eines zweiten Personenrufnetzes mit vorbekannter, zeitlicher Strukturierung, zusammen mit der AUS/EIN-Sequenz eines Rufempfängers in der Betriebsart während der Suchphase;
Fig. 6 ein Laufzeitdiagramm gemäss Fig. 5, wobei die Betriebsart in der Suchphase zum rascheren Auffinden allfälliger Signale ausgestaltet ist;
Fig. 7 ein Laufzeitdiagramm gemäss Fig. 6 und 6, wobei auf mehreren Frequenzen gesendet wird, und
Fig. 8 ein Flussdiagramm der Umschaltung zwischen den Betriebsarten.

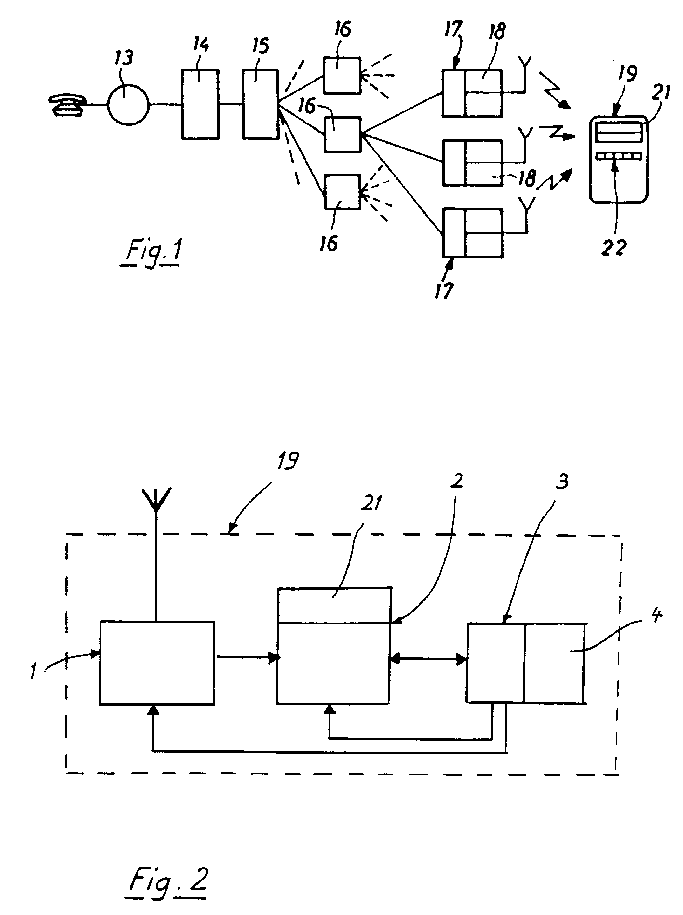

Das Personenrufnetz setzt sich gemäss Fig. 1 aus im wesentlichen folgenden Komponenten zusammen. In einer Funkrufzentrale (Paging Terminal) 14, welche das Verbindungsglied zwischen dem öffentlichen Telefonnetz 13 und dem Personenrufsystem darstellt, werden die Teilnehmerdaten verwaltet und die ankommenden Anrufe in für das Personenrufsystem geeignete, serielle Datenströme, z.B. im sog. POCSAG-Format, umgesetzt.

Eine Netzsteuereinheit (Paging Network Unit) 15 ist mit der Funkrufzentrale verbunden und sammelt eine bestimmte Anzahl Rufe jeweils in einem Datenpaket. Jedes Datenpaket wird entsprechend kodiert und zur Weitersendung bereitgestellt. Die Rufe werden so für die Aussendung nach ca. 30. Sekunden zwischengespeichert. Die Netzsteuereinheit ist zugleich für die synchrone Aussendung der Funkrufe zuständig. Hierfür versieht sie jeden Funkruf mit einem Zeitstempel, der den Zeitpunkt seiner Aussendung festlegt.

Mehrere örtlich verteilte Sendergruppen-Steuereinheiten (Transmitter Group Controllers) 16 sind mit der Netzsteuereinheit (über Telefonleitungen) verbunden. Diese Sendergruppen-Steuereinheiten verteilen die Datenpakete, die sie von der Netzsteuereinheit erhalten, auf die eigentlichen Funkrufsender oder Basisstationen.

Die Basisstationen (Base Stations) 17, von denen jeweils mehrere (über Telefonleitung) mit einer Sendergruppen-Steuereinheit verbunden sind, stellen das Ende der leitungsgebundenen bzw. den Ausgangspunkt für die Funk-Uebermittlung der Rufe dar. Von den Basisstationen werden die Rufe über Funk an die Empfänger weiter gesendet. Sie sind örtlich so verteilt, dass eine möglichst flächendeckende Ausstrahlung der Funkrufe erfolgt. Die Basisstationen besitzen eine Schnittstelle (Transmitter Site Interface) 18, welche zur Zwischenspeicherung der Rufe und zur synchronen Ausstrahlung jedes Rufes gemäss einem Zeitstempel durch den damit verbundenen Sendeempfänger (Transmitter) vorgesehen ist.

Die Rufempfänger (Paging Receivers) 19 werden von den Teilnehmern mitgetragen und empfangen die an sie adressierten Funkrufe. Die Funksignale, die von den verschiedenen Basisstationen ausgesandt werden, können sich wegen der flächendeckenden Ausstrahlung an bestimmten Orten überschneiden. Dort ist ein störungsfreier Empfang nur möglich, wenn die Funksignale verschiedener Basisstationen zeitgleich, d.h. synchron, empfangen werden. Der Synchronisationsvorgang selbst ist im einzelnen in der EP-A-198 448 beschrieben und ist nicht Gegenstand dieser Erfindung.

Die Rufempfänger 19 besitzen mehrere Schaltungsteile mit unterschiedlichen Funktionen, die in Fig. 2 schematisch gezeigt sind. Eine Empfangsschaltung 1 ist für den Empfang von Funkrufsignalen auf einer oder mehreren bestimmten Frequenzen vorgesehen. Die Empfangsschaltung 1 ist mit einem Datenverarbeitungsteil 2 verbunden, in welchem die empfangenen Rufsignale bzw. Daten decodiert werden, um festzustellen, ob diese Daten für den jeweiligen Rufempfänger bestimmt sind. Dem Datenverarbeitungsteil 2 gehört auch eine Anzeigeeinheit 21 an, auf welcher die betreffende Meldung angezeigt wird. Schliesslich ist eine Batteriesparschaltung 3 vorgesehen, welche die beiden anderen Schaltungsteile aus- und einschalten kann, um auf diese Weise den Stromverbrauch herabzusetzen. Die Batteriesparschaltung besitzt einen Zeitgeberteil 4, mit dem das Aus- und Einschalten zeitlich gesteuert wird. Der Datenverarbeitungsteil 2 kann, falls nötig, die Befehle der Batteriesparschaltung ignorieren.

Der Verbrauch der Empfangsschaltung 1 beträgt etwa 2-3 mA, derjenige des Datenverarbeitungsteils 2 etwa 200 µA und derjenige der Batteriesparschaltung 3 bloss etwa 40 µA. Es ist deshalb im Hinblick auf die Lebensdauer der Batteriespeisung lohnenswert, die beiden ersten Verbraucher so lange als nur möglich auszuschalten. Je grösser das AUS/EIN-Verhältnis ist, desto grösser ist die Lebensdauer der Batteriespeisung.

Zur Vergrösserung des AUS/EIN-Verhältnisses ist nun vorgesehen, dass sich die Betriebsart des Rufempfängers 19 der jeweiligen Empfangssituation, d.h. dem zeitlichen Eintreffen von Rufsignalen selbsttätig anpasst. Im Datenverarbeitungsteil 2 wird das zeitliche Eintreffen bzw. Ausbleiben von Rufsignalen detektiert, und entsprechend der vorliegenden Situation wird die Batteriesparschaltung 3 von einer ersten in eine angepasste zweite Betriebsart umgeschaltet, bei welcher das AUS/EIN-Verhältnis wesentlich grösser ist.

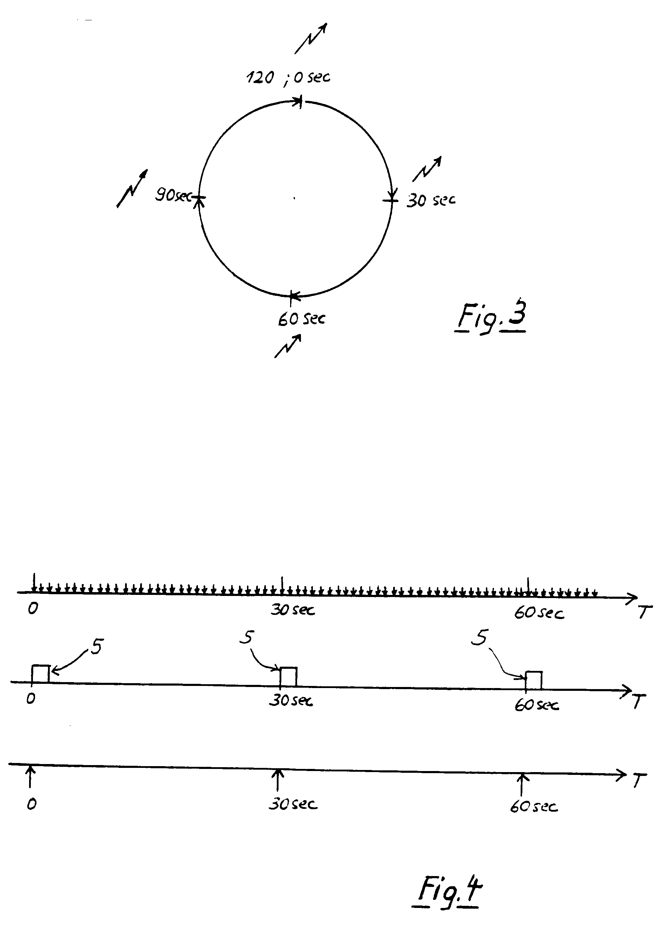

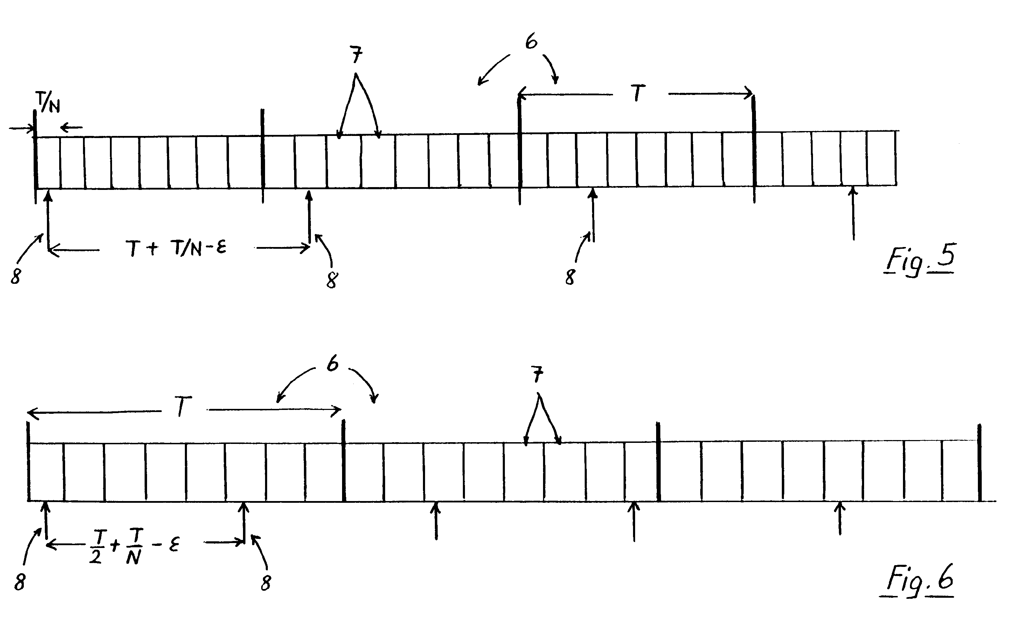

Den Fig. 3 und 4 liegt zur Veranschaulichung dieser Vorgehensweise ein Personenrufnetz zugrunde, dessen Rufsignale im POCSAG-Format ausgestrahlt werden. Jeder Aussendung geht eine Präambel von 576 Bits voran. Ein Signalblock oder batch 5 enthält dann weiter ein Synchronisationscodewort, gefolgt von 8 Signalrahmen mit je zwei Codeworten. Das erste Codewort enthält in der Regel die Adresse der angewählten Rufempfänger und einen Teil der Meldung und das zweite die restliche Meldung.

Um das Vorhandensein von Signalblöcken 5 bzw. Rufsignalen festzustellen, wird die Empfangsschaltung 1 und der Datenverarbeitungsteil 2 jedes Rufempfängers 19 in der ersten, herkömmlichen Betriebsart jede 500 Bits (d.h. bei einer Uebermittlungsrate von 512 baud ca. jede Sekunde) eingeschaltet. Er bleibt mindestens 50 µsec eingeschaltet, um festzustellen, ob eine Präambel vorhanden ist. Wenn dies nicht der Fall ist, werden die erwähnten Schaltungsteile wieder ausgeschaltet, wie aus Fig. 4 ersichtlich ist und der Suchprozess geht weiter. Findet er ein Rufsignal, so wird er für den Empfang während etwa 2 Sekunden eingeschaltet.

Die Rufnetze strukturieren nun oft die Aussendung der Signalblöcke in zeitlicher Hinsicht, wobei diese Strukturierung geändert werden kann und den Rufempfängern 19 nicht bekannt ist.

In Fig. 3 ist schematisch eine mögliche solche Strukturierung der Aussendung gezeigt, wobei die Uebermittlungen jeweils während Zyklen von je 2 Minuten in Intervallen von 30 Sekunden beginnen. Die zweite Zeile in Fig. 4 zeigt die Folge der Signalblöcke 5 auf der Zeitachse.

Im Datenverarbeitungsteil 2 des Rufempfängers werden nun die Zeitpunkte der während der ersten Betriebsart festgestellten Meldungsbeginne detektiert und gespeichert. Falls nach einer gewissen Zeit eine regelmässige Struktur festgestellt wird, erfolgt die Umschaltung in einen zweite Betriebsart der Batteriesparschaltung 3, bei welcher die Empfangsschaltung 1 und der Datenverarbeitungsteil 2 nur gemäss dieser Struktur eingeschaltet werden. Im Beispiel gemäss Fig. 3 werden die 30 Sekunden-Intervalle vom Rufempfänger festgestellt. Die Batteriesparschaltung, bzw. deren Zeitgeber 4, wird nun so gesetzt, dass sie die anderen Schaltungsteile nur jede 30 Sekunden einschaltet, wie auf der dritten Zeile in Fig. 4 schematisch gezeigt ist.

Wird während eines solchen Zyklus von 2 Minuten jeweils eine Meldung an einen Rufempfänger übermittelt (Einschaltzeit 2 sec), so beträgt die gesamte Einschaltzeit des Rufempfängers in der zweiten Betriebsart 2,15 sec. pro Zyklus, was einem AUS/EIN-Verhältnis von 54 entspricht. Wie in der Beschreibungseinleitung erläutert, war dieses Verhältnis bisher wesentlich kleiner, nämlich 15. Die Batterielebensdauer kann also um einen Faktor 5 verlängert werden.

Wird in der zweiten Betriebsart festgestellt, dass über eine gewisse Zeit keine Rufsignale mehr empfangen werden, so wird wieder in die erste Betriebsart zurückgeschaltet, bis erneut eine Zeitstruktur der Rufsignalübermittlung festgestellt wird, wonach wiederum die Umschaltung in die entsprechende zweite Betriebsart erfolgt etc. Damit passen sich die Rufempfänger 19 selbsttätig der jeweiligen Uebermittlungsstruktur so an, dass ein optimal batteriesparender Betrieb eingehalten wird.

Einem zweiten Ausführungsbeispiel liegt ein Personrufnetz zugrunde, dessen Uebermittlungen in einer bekannten zeitlichen Struktur stattfinden. Bei solchen Netzen stellt sich das Problem anders.

Hier soll der Verbrauch gesenkt werden, während die Rufempfänger in der bekannten, zeitlichen Uebermittlungsstruktur nach übermittelten Daten suchen. Dabei kann hier von der vorgegebenen zeitlichen Struktur Gebrauch gemacht werden, um durch entsprechende Zeitverschiebung bezüglich der festen Struktur beim Suchvorgang ein optimales AUS/EIN-Verhältnis zu erzielen.

In Fig. 5 ist ein Beispiel einer derartigen, festen Uebermittlungsstruktur bezeigt. Sie setzt sich auf einer bestimmten Frequenz aus Signalsequenzen 6 einer zeitlichen Länge T Sekunden zusammen (vgl. Fig. 5). Jede der Signalsequenzen 6 ist wieder unterteilt in N Uebermittlungszyklen 7, von denen jeder eine Länge von T/N hat. Die Uebermittlungen erfolgen in diesem Beispiel so, dass in mindestens einem der N Zyklen 7 pro Signalsequenz ein Rufsignal der zeitlichen Länge T/N erscheint.

Im normalen Empfangsbetrieb schaltet sich der Rufempfänger jeweils synchron zur vorbekannten zeitlichen Struktur ein, indem er z.B. weiss, dass an ihn adressierte Meldungen z.B. jeweils im ersten Zyklus einer Sequenz erscheinen.

Findet der Rufempfänger in den entsprechenden Zyklen keine Daten, so schaltet er sich aus und bleibt während einer Zeit von etwa T + oder - (T/N) Sekunden ausgeschaltet, bevor er sich wieder einschaltet. Der Fall von T + (T/N) ist in Fig. 5 zusammen mit der beschriebenen Uebermittlungsstruktur gezeigt. Die Abtastpunke 8 besitzen einen zeitlichen Abstand von T + T/N - ε. In diesem Fall braucht der Rufempfänger zur Abtastung sämtlicher N-Zyklen der Sequenz T eine Zeit von T*N Sekunden.

Eine exakte Einhaltung dieser Taktung ist dabei nicht erforderlich. Es reicht vielmehr aus, wenn sichergestellt wird, dass jeweils unterschiedliche Zyklen in den Sequenzen abgetastet werden. Um dies zu gewährleisten, ist eine kleine Zeitverschiebung ε von Vorteil, welche ausreichend gross ist, um sicherzustellen, dass innerhalb der Genauigkeit der vorhandenen Taktung jeweils andere Zyklen abgetastet werden.

Das AUS/EIN-Verhältnis beträgt ((N*T)+T)/D:1, wobei D die Zeit ist, während welcher der Rufempfänger angeschaltet ist, um das Vorliegen von Daten festzustellen.

Wird als typische Grössen angenommen: Sequenzen mit je N = 10 Zyklen und einer Länge von T = 50 sec bei D = 100 ms, so ergibt sich ein AUS/EIN-Verhältnis von 550:1 und die maximale Zeit zur Abtastung aller Zyklen N beträgt N*T = 250 Sekunden.

Gemäss einer Abwandlung, welche in Fig. 6 schematisch dargestellt ist, kann die Zeit zur Abtastung aller Zyklen dadurch reduziert werden, dass der Abtastrhythmus erhöht wird. So kann z.B. die Abtastung jede T/W + oder - (T/N) Sekunden erfolgen, wobei W eine ganze Zahl ist.

Wenn z.B., wie in Fig. 6 gezeigt, W = 2 gewählt wird, werden die Zyklen 7 mit etwa doppelter Geschwindigkeit abgetastet. Die Suchzeit der Abtastung aller Zyklen halbiert sich etwa zusammen mit einer entsprechenden Herabsetzung des AUS/EIN-Verhältnisses und der Batterieeinsparung. Auf diese Weise kann optimiert werden zwischen einer relativ kleinen Suchzeit, die einen einwandfreien Betrieb gewährleistet und einem guten AUS/EIN-Verhältnis, das eine lange Batterielebensdauer bewirkt.

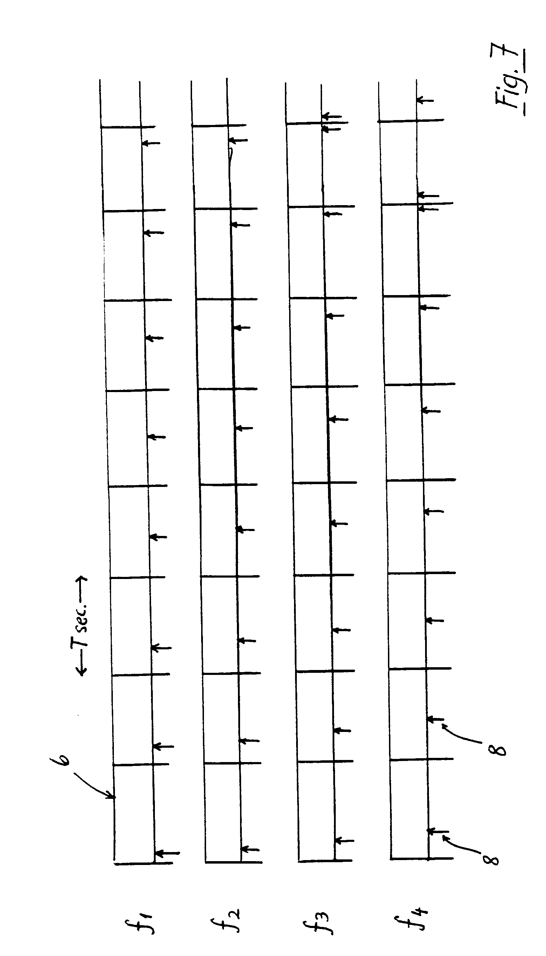

Falls in einem komplexeren Funkrufnetz die Rufsignale auf mehreren Frequenzen f₁,f₂, ... ausgestrahlt werden, schaltet der Rufempfänger, wie in Fig. 7 gezeigt, durch alle Frequenzen f₁, f₂... hindurch, statt gemäss der bisherigen Beschreibung nur in einer Frequenz nach Rufsignalen zu suchen, wobei die Abtastung 8 der Signalsequenzen 6 auf die bereits erläuterte Art geschieht. Legt man das vorstehende Rechenbeispiel mit T=50 sec, N=10 und D=100 msec zugrunde, so ergibt sich bei 10 Frequenzen ein AUS/EIN-Verhältnis von 55, wobei maximal 250 sec benötigt werden, um Daten zu finden, wenn solche vorliegen.

Wenn gemäss einer der oben beschriebenen Suchbetriebsarten auf einer Frequenz Daten detektiert worden sind, bleibt der Rufempfänger angeschaltet, um Zeit- oder andere Informationen zu suchen. Danach ist der Betrieb des Rufempfängers wieder eine Funktion des Funkrufnetzes und von dessen Uebermittlungsstruktur.

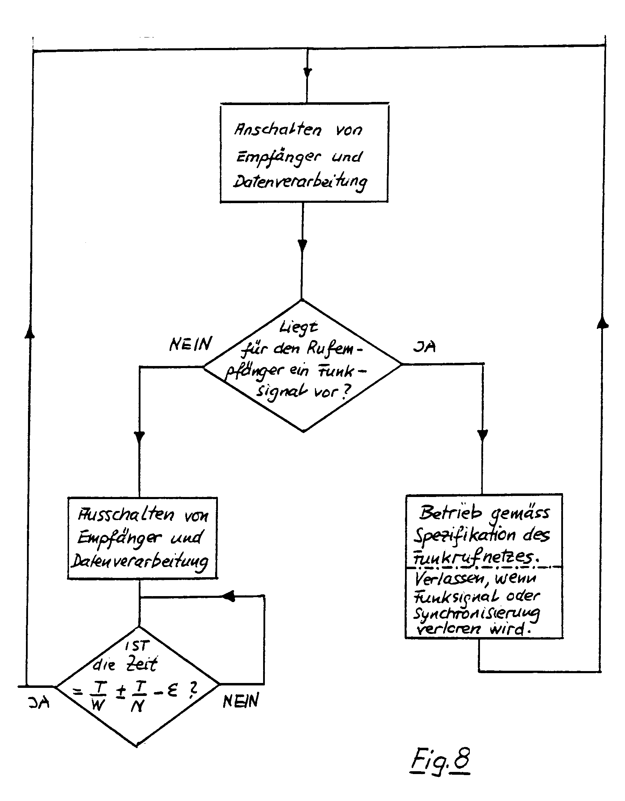

In Fig. 8 sind in der Form eines Flussdiagrammes die erläuterten Betriebsarten eines Rufempfängers dargestellt, wobei die linke Hälfte des Diagrammes im wesentlichen den Ablauf in der zweiten Betriebsart, d.h. den Suchbetrieb bei verlorenem Rufsignal, zeigt.

Im Block in Fig. 8, welcher den Normalbetrieb gemäss den Spezifikationen des personenrufnetzes darstellt, wird angenommen, dass der betreffende Rufempfänger ein ausreichendes Funksignal für den Normalbetrieb empfängt. Dabei arbeitet der Rufempfänger gemäss bekannten Standard-Betriebsarten für die Batterieeinsparung. Wenn der Rufempfänger das Signal oder die Zeitinformation verliert, so dass er nicht mehr annehmen kann, es liege ein Funkrufsignal vor, schaltet er sich in die oben erläuterte zweite Betriebsart. Dabei können verschiedene Rufempfänger je nach Einsatzbedingungen unterschiedliche Algorhythmen besitzen, um die Umschaltung in die zweite Betriebsart zu steuern.

In der beschriebenen Technik ist es während der zweiten Betriebsart des Rufempfängers lediglich nötig, das Vorliegen einer Uebermittlung als solches zu detektieren. Es ist dabei nicht nötig, dass eine bestimmte Bitsequenz gesucht und gefunden wird, wie z.B. ein Synchronisationscodewort. Für diese Detektion von Signalen im Suchbetrieb des Rufempfängers sind verschiedene Techniken einsetzbar. Es können dazu z.B. Signalstärke-Detektoren oder demodulierte Datenrauschdetektoren eingesetzt werden.

Die bisher beschriebenen Ausführungsbeispiele können ferner zusätzlich mit einer weiteren Batteriesparfunktion kombiniert werden, welche für den Fall vorgesehen ist, dass jedes Rufsignal für einen bestimmten Rufempfänger aus Redundanzgründen mehrmals hintereinander ausgestrahlt wird. Dazu ist es vorteilhaft, die Adressinformation für die Rufempfänger mit einer Meldungsnummer zu ergänzen, welche jeder Meldung zugeordnet wird. Hat der betreffende Rufempfänger eine Meldung mit dieser Nummer bereits empfangen, wird er eine spätere, an ihn adressierte Meldung mit derselben Nummer nur bis und mit der Adresse empfangen und auswerten und sich danach ausschalten. Damit kann das AUS/EIN-Verhältnis weiter verbessert werden, ohne dass eine Einbusse an Betriebssicherheit entsteht.

## Patentansprüche

1. Verfahren zum batteriesparenden Betrieb eines tragbaren Rufempfängers für Funkrufsignale in einem Personenrufnetz, wobei der Rufempfänger mindestens eine Empfangsschaltung für die Funkrufsignale, einen Datenverarbeitungsteil für die Verarbeitung der empfangenen Daten und eine Batteriesparschaltung zum Aus- und Einschalten mindestens der Empfangsschaltung besitzt, und wobei im Rufempfänger die zeitlichen Bedingungen des Eintreffens bzw. Ausbleibens von Funkrufsignalen festgestellt werden und sich der Rufempfänger gemäss den festgestellten Bedingungen selbsttätig zwischen einer ersten und einer zweiten Betriebsart umschaltet, wobei in der ersten und der zweiten Betriebsart der Aus-/Einschaltvorgang jeweils unterschiedlich so gesteuert wird, dass sich das zeitliche Verhältnis von Aus- zu Einschaltung an die festgestellten Bedingungen batteriesparend anpasst, dadurch gekennzeichnet, dass im Personenrufnetz die Personenrufsignale für den Rufempfänger in nicht vorbestimmten, jedoch über eine gewisse Betriebsdauer zeitlich gleichen Zyklen übermittelt werden, und dass der Rufempfänger in der ersten Betriebsart die Empfangsschaltung mit hoher Abtastrate aus- und einschaltet, um Rufsignale zu detektieren und ihren jeweiligen Zyklus festzustellen, und dass er sich danach in der zweiten Betriebsart mit reduzierter Abtastrate gemäss dem festgestellten Zyklus aus- und einschaltet.

2. Verfahren nach Anspruch 1, dadurch gekennzeichnet, dass das Personenrufnetz Rufsignale im POCSAG-Format übermittelt und die Abtastrate in der ersten Betriebsart durch die Länge der Präambel jedes POCSAG-Signalblocks bestimmt ist, derart, dass während jeder Präambel mindestens eine Abtastung stattfindet und dass die Abtastrate in der zweiten Betriebsart durch die Zyklen der Aussendung der Signalblöcke im Personenrufnetz gegeben ist.

3. Verfahren zum batteriesparenden Betrieb eines tragbaren Rufempfängers für Funkrufsignale in einem Personenrufnetz, wobei der Rufempfänger mindestens eine Empfangsschaltung für die Funkrufsignale, einen Datenverarbeitungsteil für die Verarbeitung der empfangenen Daten und eine Batteriesparschaltung zum Aus- und Einschalten mindestens der Empfangsschaltung besitzt, und wobei im Rufempfänger die zeitlichen Bedingungen des Eintreffens bzw. Ausbleibens von Funkrufsignalen festgestellt werden und sich der Rufempfänger gemäss den festgestellten Bedingungen selbsttätig zwischen einer ersten und einer zweiten Betriebsart umschaltet, wobei in der ersten und der zweiten Betriebsart der Aus-/Einschaltvorgang jeweils unterschiedlich so gesteuert wird, dass sich das zeitliche Verhältnis von Aus- zu Einschaltung an die festgestellten Bedingungen batteriesparend anpasst, dadurch gekennzeichnet, dass im Personenrufnetz die Personenrufsignale für den Rufempfänger gemäss einer vorbestimmten zeitlichen Struktur erfolgen, und die Personenrufsignale innerhalb mindestens einem von N Zyklen in einer Sequenz bestimmter zeitlicher Länge T ausgestrahlt werden und dass der Rufempfänger in der ersten Betriebsart die Empfangsschaltung gemäss der vorbestimmten zeitlichen Struktur aus- und einschaltet und dass nach einem Verlieren des Empfangs in die zweite Betriebsart umgeschaltet wird, in der die Empfangsschaltung gemäss einem batteriesparenden Suchalgorhythmus aus- und eingeschaltet wird, derart, dass die Abtastung in der zweiten Betriebsart in Intervallen der Länge von etwa (T/W) + oder - (T/N) erfolgt, wobei W eine wählbare Zahl ist.

4. Verfahren nach Anspruch 3, dadurch gekennzeichnet, dass die Abtastung in der zweiten Betriebsart in Intervallen der Länge (T/W) + oder - (T/N) + ε erfolgen, wobei ε wesentlich kleiner als T/N ist.

5. Verfahren nach Anspruch 3 oder 4, wobei die Personenrufsignale auf mehreren Frequenzen ausgesendet werden, dadurch gekennzeichnet, dass die Empfangsschaltung in der zweiten Betriebsart zwischen den Frequenzen umgeschaltet wird, wobei sie in jeder Frequenz gemäss dem batteriesparenden Suchalgorhythmus aus- und eingeschaltet wird.

6. Verfahren nach einem der vorangehenden Ansprüche, wobei jede Rufmeldung mehrfach übermittelt wird, dadurch gekennzeichnet, dass gleiche Rufmeldungen durch jeweils eine gemeinsame Meldungsnummer charakterisiert sind, welche mit einem Adressteil der Meldung übermittelt wird und dass der Rufempfänger nach Empfang der Meldungsnummer einer bereits erhaltenen Meldung die Empfangsschaltung ausschaltet, ohne die restliche Meldung zu empfangen.

## Claims

1. A method for a battery saving operation of a portable paging receiver for radio paging calls in a radio paging network, wherein the radio paging receiver comprises at least one receiver circuit for the radio paging calls, a data processing section for processing the received data and a battery saving circuit for switching on and off at least the receiver circuit, and wherein the temporal conditions of the arrival or absence, respectively, of radio paging calls are determined in the paging receiver, and the paging receiver is switching automatically between a first and a second mode of operation according to the determined conditions, wherein in the first and the second mode of operation the operation of switching on and off is controlled differently in such a way that the temporal ratio of switching on and off adapts itself to the determined conditions in a battery saving manner, characterised in that in the paging network the paging calls for the paging receiver are emitted in a not predefined cycles but in cycles that are temporally constant over a certain time of operation, and that in the first mode of operation the paging receiver is switching the receiver circuit on and off with a high sampling rate for detecting paging calls and their respective cycle and that after this, in the second mode of operation, it switches itself on and off with a reduced sampling rate according to the determined cycle.

2. The method of claim 1, characterised in that the paging network is transmitting paging calls in the POCSAG format and that the sampling rate in the first mode of operation is determined by the length of the preamble of each POCSAG signal block such that at least one sampling operation takes place during each preamble and that the sampling rate in the second mode of operation is given by the cycles of the emission of the signal blocks in the paging network.

3. A method for a battery saving operation of a portable paging receiver for radio paging calls in a radio paging network, wherein the radio paging receiver comprises at least one receiver circuit for the radio paging calls, a data processing section for processing the received data and a battery saving circuit for switching on and off at least the receiver circuit, and wherein the temporal conditions of the arrival or absence, respectively, of radio paging calls are determined in the paging receiver, and the paging receiver is switching automatically between a first and a second mode of operation according to the determined conditions, wherein in the first and the second mode of operation the operation of switching on and off is controlled differently in such a way that the temporal ratio of switching on and off adapts itself to the determined conditions in a battery saving manner, characterised in that in the paging network the paging calls for the paging receiver system are occurring according to a predefined temporal structure and the paging calls are emitted within at least one of N cycles in a sequence of a given temporal length T and that in the first mode of operation the paging receiver switches the receiver circuit on and off according to the predefined temporal structure and that after a loss of the reception the paging receiver is switched into the second mode of operation, where the receiver circuit is switched on and off according to a battery saving search algorithm, such that the sampling in the second mode of operation occurs in intervals of the length of approximately (T/W) + or - (T/N), wherein W is a choosable number.

4. The method of claim 3 characterised in that in the second mode of operation the sampling occurs in intervals of the length of (T/W) + or - (T/N) + Σ, wherein Σ is substantially smaller than T/N.

5. The method of claim 3 or 4, wherein the radio paging calls are emitted on several frequencies, characterised in that in the second mode of operation the receiving circuit is switched between the frequencies wherein it is switched on and off in each frequency according to the battery saving search algorithm.

6. The method of one of the preceding claims wherein each paging call is transmitted several times, characterised in that equal paging calls are characterised by a common message number which is transmitted with an address part of the message and that the paging receiver is switching off the receiver circuit after the receipt of the message number of an already received message without receiving the rest of the message.

## Revendications

1. Procédé pour faire fonctionner, d'une manière économisant les piles, un récepteur d'appels portatif pour des signaux d'appel radio dans un réseau d'appel de personnes, selon lequel le récepteur d'appels possède au moins un circuit de réception pour les signaux d'appel radio, et une partie de traitement de données pour le traitement de données reçues et un circuit qui économise les piles, pour le débranchement et le branchement au moins du circuit de réception, et selon lequel, dans le récepteur d'appels, les conditions dans le temps de l'arrivée ou de l'absence de signaux d'appel radio sont déterminées et le récepteur d'appels est commuté automatiquement, conformément aux conditions établies, entre un premier type de fonctionnement et un second type de fonctionnement, et selon lequel pendant les premier et second types de fonctionnement, le processus d'arrêt/marche est commandé respectivement différemment de sorte que le comportement dans le temps du débranchement au branchement est adapté, d'une manière réalisant une économie des piles, aux conditions fixées, caractérisé par le fait que dans le réseau d'appel de personnes, les signaux d'appel de personnes sont retransmis, pour le récepteur d'appels, pendant des cycles non prédéterminés, mais qui sont de même durée pendant un certain intervalle de temps de fonctionnement, et que, dans le premier type de fonctionnement, le récepteur d'appels débranche et branche le circuit de réception avec une fréquence élevée d'exploitation, pour détecter des signaux d'appel et fixer leur cycle respectif, et qu'ensuite, il se débranche et se branche, pendant le second cycle de fonctionnement, avec une cadence réduite d'exploration, conformément au cycle fixé.

2. Procédé selon la revendication 1, caractérisé en ce que le réseau d'appel de personnes retransmet des signaux d'appel selon le format POCSAG et que pendant le premier type de fonctionnement, la cadence d'exploration est déterminée par la longueur du préambule de chaque bloc de signaux POCSAG, de telle sorte que, pendant chaque préambule, au moins une exploration est exécutée et que la fréquence de commutation dans le second type de fonctionnement est déterminée par les cycles d'émission des blocs de signaux dans le réseau d'appel de personnes.

3. Procédé pour faire fonctionner, d'une manière économisant les piles, un récepteur d'appels portatif pour des signaux d'appel radio dans un réseau d'appel de personnes, selon lequel le récepteur d'appels possède au moins un circuit de réception pour les signaux d'appel radio, et une partie de traitement de données pour le traitement de données reçues et un circuit qui économise les piles, pour le débranchement et le branchement au moins du circuit de réception, et selon lequel, dans le récepteur d'appels, les conditions dans le temps de l'arrivée ou de l'absence de signaux d'appel radio sont déterminées et le récepteur d'appels est commuté automatiquement, conformément aux conditions établies, entre un premier type de fonctionnement et un second type de fonctionnement, et selon lequel pendant les premier et second types de fonctionnement, le processus d'arrêt/marche est commandé respectivement différemment de sorte que le comportement dans le temps du débranchement au branchement est adapté, d'une manière réalisant une économie des piles, aux conditions fixées, caractérisé en ce que dans le réseau d'appel de personnes, les signaux d'appel de personnes sont transmis, pour le récepteur d'appels, conformément à une structure temporelle prédéterminée, et les signaux d'appel de personnes sont émis pendant au moins l'un de N cycles selon une séquence possédant une durée déterminée T et que dans le premier type de fonctionnement, le récepteur d'appels débranche et branche le circuit de réception conformément à la structure temporelle prédéterminée et qu'après l'abandon de l'état de réception, le fonctionnement est commuté sur le second type de fonctionnement, dans lequel le circuit de réception est débranché et branché conformément à un algorithme de recherche, qui économise des piles, de telle sorte que l'exploration dans le second type de fonctionnement s'effectue à des intervalles d'une durée égale à environ (T/W) + ou -(T/N), W étant un nombre pouvant être sélectionné.

4. Procédé suivant la revendication 3, caractérisé en ce que la manipulation dans le second type de fonctionnement s'effectue à des intervalles ayant pour longueur (T/W) + ou -(T/N)+ε, ε étant nettement inférieur à T/N.

5. Procédé suivant la revendication 3 ou 4, selon lequel les signaux d'appel de personnes sont émis avec plusieurs fréquences, caractérisé en ce que dans le second type de fonctionnement, le circuit de réception est commuté entre les fréquences, en étant débranché et branché, pour chaque fréquence, conformément à l'algorithme de recherche qui économise les piles.

6. Procédé suivant l'une des revendications précédentes, selon lequel chaque signalisation d'appel est transmise plusieurs fois, caractérisé en ce que des signalisations d'appel identiques sont caractérisées respectivement par un numéro de signalisation commun, qui est transmis avec une partie d'adresse de la signalisation et qu'après la réception d'une signalisation déjà reçue, le récepteur d'appels débranche le circuit de réception, sans recevoir le reste de la signalisation.
